# NEUE EUROPÄISCHE PATENTSCHRIFT

(11) **EP 2 927 067 B2**
(45) Veröffentlichungstag und Bekanntmachung des Hinweises auf die Entscheidung über den Einspruch: **14.12.2022**
(45) Hinweis auf die Patenterteilung: 10.01.2018
(21) Anmeldenummer: 15000276.4
(22) Anmeldetag: 29.01.2015
(51) Int. Cl.: B60T 13/68, B60T 13/04, B60T 13/38

(54) **Elektrische Federspeicher-Feststellbremse**
Electrical spring-operated parking brake
Frein à ressort d'accumulateur électrique

(30) Priorität: 05.04.2014 DE 102014004933
(43) Veröffentlichungstag der Anmeldung: 07.10.2015
(73) Patentinhaber: MAN Truck & Bus SE, 80995 München (DE)
(72) Erfinder: Heim, Volker, 81241 München (DE); Hofstetter, Thomas, 84048 Mainburg (DE); Kolland, Wolfgang, 81245 München (DE); Azahaf, Hicham, 81541 München (DE)
(74) Vertreter: v. Bezold & Partner Patentanwälte - PartG mbB

(56) Entgegenhaltungen:
- EP-A2- 0 212 074
- EP-A2- 1 923 286
- WO-A1-03/004333
- WO-A1-2012/049649
- DE-A1-102007 051 151
- DE-A1-102010 021 909
- DE-A1-102010 050 578
- DE-A1-102011 016 740

## Beschreibung

Die Erfindung betrifft eine elektrische Feststellbremsvorrichtung für ein Fahrzeug, vorzugsweise für ein Nutzfahrzeug.

Nutzfahrzeugbremsanlagen umfassen ein Betriebsbremssystem und ein Parkbremssystem, die zumeist unabhängig voneinander pneumatisch oder elektropneumatisch gesteuert werden. Parkbremssysteme, nachfolgend auch als Feststellbremssysteme bezeichnet, umfassen zumeist Federspeicherbremszylinder, die in ihrem entlüfteten Zustand das Fahrzeug bremsen, während die Parkbremse durch Belüften des Federspeicherbremszylinders gelöst werden kann.

Nutzfahrzeuge können ferner mit einem Batterietrennschalter, nachfolgend auch als Not-Aus-Trennschalter bezeichnet, ausgestattet werden. Mit einem derartigen Batterietrennschalter können eine oder mehrere Batterien, z. B. im Gefahrenfall, vom angeschlossenen Bordnetz abgetrennt werden. Hierbei tritt das Problem auf, dass nach Betätigung des Not-Aus-Trennschalters oder auch allgemein bei Ausfall der Stromversorgung das Betätigen einer elektrischen Feststellbremse nicht mehr möglich ist.

Es ist somit eine Aufgabe der Erfindung, eine elektrische Feststellbremse bereitzustellen, mit der Nachteile herkömmlicher elektrischer Feststellbremsen vermieden werden können. Der Erfindung liegt insbesondere die Aufgabe zugrunde, eine elektrische Feststellbremse derart weiterzubilden, dass das Nutzfahrzeug bzw. die Zugkombination auch bei Ausfall der Stromversorgung sicher abgestellt bzw. sicher im Stillstand gehalten werden kann.

Diese Aufgaben werden durch eine elektrische Feststellbremsvorrichtung gemäß den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Die erfindungsgemäße elektrische Feststellbremsvorrichtung für ein Fahrzeug weist in Übereinstimmung mit dem Stand der Technik eine Feststellbremsventilanordnung und wenigstens einen Federspeicherbremszylinder auf. Der wenigstens eine Federspeicherbremszylinder ist über eine Versorgungsleitung und die Feststellbremsventilanordnung mit einer Druckluftquelle, z. B. einem Druckluftvorrat, verbindbar. Hierbei ist der wenigstens eine Federspeicherbremszylinder im gelösten Zustand der Feststellbremsvorrichtung mit Druck der Druckluftquelle über die Feststellbremsventilanordnung beaufschlagt und im eingelegten Zustand der Feststellbremsvorrichtung über die Feststellbremsventilanordnung mit einer Drucksenke verbindbar. Die Drucksenke kann durch eine Verbindung mit der Umgebungsluft gebildet sein. Die Feststellbremsventilanordnung ist ferner ausgelegt, zum Einlegen des gelösten oder eingelegten Zustands in einer ersten Betriebsart elektropneumatisch gesteuert zu werden.

Das Dokument DE 10 2007 051 151 A1 offenbart eine elektropneumatische Feststellbremseinrichtung. Aus der Offenlegungsschrift DE 10 2011 016 740 A1 ist eine elektropneumatische Feststellbremseinrichtung einer Zugfahrzeug-Anhängerkombination zur Durchführung wenigstens einer Feststellbremsfunktion einer Feststellbremse bekannt, wobei ein von einer Bedienperson betätigbares Ventil vorgesehen ist, das bei einer Störung der Elektrik dazu verwendet werden kann, die Anhängerbremse zuzuspannen.

Die Erfindung baut auf diesem Stand der Technik dadurch auf, dass die Feststellbremse in einer zweiten Betriebsart mittels einer rein pneumatischen Backup-Lösung, d. h. ohne Strom, eingelegt und gelöst werden kann. Hierzu weist die Feststellbremsventilanordnung eine muskelkraftbetätigbare Bedieneinheit, nachfolgend auch als zweites Bedienelement bezeichnet, auf und ist ferner dazu ausgelegt, zum Einlegen des gelösten oder eingelegten Zustands in einer zweiten Betriebsart unter Verwendung der muskelkraftbetätigbaren Bedieneinheit rein pneumatisch gesteuert zu werden. Die muskelkraftbetätigbare Bedieneinheit kann ein Handbremsventil, ein Schalter, eine Taste oder ein Druckknopf etc. sein, mittels der manuell eine Druckluftleitung zur Umgebung hin geöffnet werden kann.

Ein besonderer Vorzug der Erfindung liegt somit darin, dass die Feststellbremse unabhängig vom elektrischen Betriebszustand des Fahrzeugs betätigt werden kann.

Die Feststellbremsventilanordnung umfasst eine elektropneumatisch steuerbare Ventileinrichtung, die Anschlüsse für elektrische Steuerleitungen, einen ersten Anschluss für eine Versorgungsleitung zur Verbindung der Ventileinrichtung mit der Druckluftquelle und wenigstens einen zweiten Anschluss für eine Druckluftleitung zum Verbinden der elektro-pneumatischen Ventileinrichtung mit einem oder mehreren Federspeicherbremszylindern aufweist.

Hierbei ist die Ventileinrichtung ausgeführt, im gelösten Zustand der Feststellbremsvorrichtung eine am wenigstens zweiten Anschluss angeschlossene Druckluftleitung mit dem Druck der Druckluftquelle zu beaufschlagen und zum Einlegen der Feststellbremsvorrichtung die an dem wenigstens einen zweiten Anschluss angeschlossene Druckluftleitung zu entlüften.

Bei Nutzfahrzeugen mit Anhängern kann die elektropneumatisch steuerbare Ventileinrichtung einen dritten Anschluss zum Verbinden der elektropneumatischen Ventileinrichtung mit einer Anhängerventileinrichtung, die die Anhängerbremsanlage steuert, aufweisen. Hierbei kann die Ventileinrichtung wiederum ausgelegt sein, im gelösten Zustand der Feststellbremsvorrichtung eine an dem wenigstens einen dritten Anschluss angeschlossene Druckluftleitung mit Druck der Druckluftquelle zu beaufschlagen und zum Einlegen der Anhängerbremsanlage die am wenigstens einen dritten Anschluss angeschlossene Druckluftleitung zu entlüften.

Die vorgenannte elektropneumatisch steuerbare Ventileinrichtung ist in einer baulichen Einheit bereitgestellt, so dass die elektropneumatisch steuerbare Ventilanordnung baulich kompakt in einem Gehäuse untergebracht ist.

Gemäß einer bevorzugten ersten Ausgestaltungsform bildet die vorliegende Erfindung eine derartige elektropneumatisch steuerbare Ventileinrichtung dahingehend weiter, dass ferner ein schaltbares erstes Steuerventil vorgesehen ist, das einen mit dem wenigstens einen zweiten Anschluss der elektropneumatisch steuerbaren Ventileinrichtung pneumatisch verbundenen ersten Eingang, einen mit der Druckluftquelle pneumatisch verbundenen zweiten Eingang und einen Ausgang aufweist.

Gemäß dieser Ausführungsvariante ist ferner ein in Bezug auf die elektropneumatische Ventileinrichtung externes Relaisventil vorgesehen, das einen mit dem Ausgang des ersten Steuerventils pneumatisch verbundenen Steuereingang, einen mit der Druckluftquelle pneumatisch verbundenen Arbeitseingang und einen mit dem mindestens einen Federspeicherbremszylinder pneumatisch verbundenen Arbeitsausgang aufweist.

Das muskelkraftbetätigbare Bedienelement ist hierbei zwischen dem zweiten Eingang des ersten Steuerventils und der Druckluftquelle angeordnet, d. h. an einer den zweiten Eingang des ersten Steuerventils und die Druckluftquelle verbindenden Druckluftleitung. Das muskelkraftbetätigbare Bedienelement kann dabei in eine Stellung gebracht werden, in der die Druckluftleitung entlüftet wird.

Hierbei ist zu erwähnen, dass es sich bei dem vorgenannten Relaisventil nicht um das "interne" Relaisventil der elektropneumatisch steuerbaren Ventileinrichtung handelt, sondern um ein weiteres Relaisventil, nachfolgend auch als externes Relaisventil bezeichnet. Wie weiter unten stehend noch erläutert wird, weisen die bekannten elektropneumatischen Ventileinrichtungen bereits ein internes Relaisventil auf, über das die an dem zweiten Anschluss bzw. den zweiten Anschlüssen und dem dritten Anschluss der elektropneumatischen Ventileinrichtung angeschlossene Druckluftleitung bzw. Druckluftleitungen entlüftet werden können.

Gemäß einer weiteren Variante der bevorzugten ersten Ausgestaltungsform mit dem schaltbaren ersten Steuerventil und dem dritten Anschluss der Ventileinrichtung kann die elektrische Feststellbremsvorrichtung ein schaltbares zweites Steuerventil aufweisen. Das zweite Steuerventil weist einen mit dem dritten Anschluss der Ventileinrichtung pneumatisch verbundenen ersten Eingang auf. Ein zweiter Eingang des zweiten Steuerventils ist mit der am zweiten Eingang des ersten Steuerventils angeschlossenen und mit der mittels des muskelkraftbetätigbaren Bedienelements entlüftbaren Druckluftleitung pneumatisch verbunden. Ein Ausgang des zweiten Steuerventils ist mit der Anhängerventileinrichtung pneumatisch verbunden. Diese Variante bietet den Vorteil, dass zusätzlich auch die Anhängerbremsanlage über die Anhängerventilanordnung rein pneumatisch, d. h. ohne Strom, betätigt werden kann.

Eine vorteilhafte Variante sieht vor, dass das erste Steuerventil und/oder das zweite Steuerventil ein 3/2-Wegeventil ist.

Ferner können das vorgenannte erste Steuerventil und/oder das zweite Steuerventil so ausgelegt sein, dass das Steuerventile jeweils denjenigen seiner beiden Eingänge mit dem Ausgang pneumatisch verbindet, der mit dem kleineren Druck beaufschlagt ist.

Ferner kann das externe Relaisventil der vorgenannten Ausführungsvarianten so ausgeführt sein, dass bei Unterschreiten eines vorgegebenen Mindestdrucks, mit dem der Steuereingang beaufschlagt ist, das Relaisventil von einer Durchlassstellung, in der der Arbeitseingang mit dem Arbeitsausgang pneumatisch verbunden ist, in eine Entlüftungsstellung schaltet, in der der Arbeitsausgang mit einem Entlüftungsausgang des Relaisventils pneumatisch verbunden ist.

Die Feststellbremsventilanordnung der vorgenannten Ausgestaltungsformen umfasst somit die elektropneumatisch steuerbare Ventileinrichtung, das schaltbare erste Steuerventil, das externe Relaisventil, und nur gemäß der zusätzlichen Variante zur Steuerung der Anhängerbremsanlage das zusätzliche schaltbare zweite Steuerventil, die über Druckluftleitungen, wie vorstehend beschrieben, miteinander koppelbar sind. Die Feststellbremsventilanordnung kann in einer ersten Betriebsart elektropneumatisch und in einer zweiten Betriebsart rein pneumatisch gesteuert werden.

Im nichteingelegten Zustand der Feststellbremse des Fahrzeugs sind die Druckluftleitungen und die Federspeicherbremszylinder belüftet bzw. mit einem Druck der Druckluftquelle beaufschlagt.

Im normalen Betriebsmodus, d. h. bei intakter Stromversorgung, kann durch eine Betätigung einer ersten Bedieneinheit im Fahrerhaus, die über elektrische Steuerleitungen mit der elektropneumatischen Ventileinrichtung verbunden ist, eine Entlüftung der Federspeicherbremszylinder elektropneumatisch eingeleitet werden. Hierbei ist die Ventileinrichtung ausgelegt, bei Eingang eines entsprechenden elektrischen Steuersignals der ersten Bedieneinheit die an dem zweiten Ausgang der Ventileinrichtung angeschlossene Druckluftleitung zu entlüften.

Dadurch ist der am Ende der entlüfteten Druckluftleitung angeordnete erste Eingang des ersten Steuerventils mit einem kleineren Druck als der zweite Eingang des ersten Steuerventils beaufschlagt, so dass der erste Eingang des ersten Steuerventils mit dem Ausgang des ersten Steuerventils pneumatisch verbunden ist. Dadurch wird die Druckluftleitung, die den Ausgang des schaltbaren ersten Steuerventils mit dem Steuereingang des Relaisventils verbindet, ebenfalls entlüftet.

Die Entlüftung der am Ausgang des ersten Steuerventils angeschlossenen Druckluftleitung bewirkt somit eine Drucksenkung am Steuereingang des externen Relaisventils, so dass dieses von einer Durchlassstellung in eine Entlüftungsstellung schaltet, in der der Arbeitsausgang des externen Relaisventils mit einem Entlüftungsausgang des externen Relaisventils pneumatisch verbunden ist. Somit wird die am Arbeitsausgang angeschlossene Druckluftleitung, die ferner mit dem wenigstens einen Federzylinder verbunden ist, ebenfalls zur Umgebung hin entlüftet. Folglich werden die Federspeicherbremszylinder mit entlüftet und die Federspeicherbremsen eingelegt.

Bei der Variante der ersten Ausgestaltungsform mit dem zweiten Steuerventil kann die Anhängerventileinrichtung in der ersten Betriebsart in herkömmlicher Weise direkt über die elektropneumatische Ventileinrichtung belüftet und entlüftet werden. Dies liegt daran, dass das zweite Steuerventil in einer Durchlassstellung geschaltet ist, die den ersten Eingang mit dem Ausgang des zweiten Steuerventils verbindet, solange die am zweiten Eingang des zweiten Steuerventils angeschlossenen Druckluftleitung nicht mittels des muskelkraftbetätigbaren Bedienelements entlüftet wird. In dieser Durchlassstellung ist der dritte Anschluss der elektropneumatischen Ventileinrichtung über den ersten Eingang und den Ausgang des schaltbaren zweiten Steuerventils mit der Anhängerventileinrichtung pneumatisch verbunden und kann somit in bekannter Weise direkt über die Ventileinrichtung elektropneumatisch belüftet und entlüftet werden.

Nach Betätigung des Batterietrennschalters oder nach Ausfall der Stromversorgung können die Federspeicherbremsen ferner gemäß der zweiten Betriebsart rein pneumatisch eingelegt werden.

Hierzu wird das muskelkraftbetätigbare zweite Bedienelement manuell in eine geöffnete Stellung gebracht, so dass die Druckluftleitung am zweiten Bedienelement entlüftet wird. Dadurch sinkt der Druck am zweiten Eingang des schaltbaren ersten Steuerventils, wodurch dieses aktiviert wird und den zweiten Eingang mit dem Ausgang pneumatisch koppelt. Folglich wird wiederum die am Ausgang angeschlossene Druckluftleitung entlüftet, die als Steuerleitung für das externe Relaisventil dient, wodurch, wie vorstehend beschrieben, die Entlüftung der Federspeicherbremszylinder über den Entlüftungsausgang des externen Relaisventils eingeleitet wird.

Bei der Variante der ersten Ausgestaltungsform mit dem zweiten Steuerventil kann die Anhängerventileinrichtung in der zweiten Betriebsart ebenfalls rein pneumatisch gesteuert werden. Gemäß dieser Variante wird wiederum das muskelkraftbetätigbare zweite Bedienelement manuell in die geöffnete Stellung gebracht, so dass die Druckluftleitung am zweiten Bedienelement entlüftet wird. Dadurch sinkt der Druck am zweiten Eingang des schaltbaren ersten Steuerventils und am zweiten Eingang des schaltbaren zweiten Steuerventils, wodurch diese aktiviert werden. Dadurch wird insbesondere der zweite Eingang mit dem Ausgang des zweiten Steuerventils pneumatisch gekoppelt. Folglich wird wiederum die am Ausgang des zweiten Steuerventils angeschlossene Druckluftleitung entlüftet, die das zweite Steuerventil mit der Anhängerventileinrichtung verbindet. Dadurch erfolgt die Entlüftung der Anhängerventileinrichtung über das zweite Steuerventil und die durch das muskelkraftbetätigbare zweite Bedienelement entlüftete Druckluftleitung.

Ein weiterer Vorzug der vorgenannten Ausgestaltungsform liegt ferner darin, dass durch die beschriebene Erweiterung einer herkömmlichen elektropneumatischen Ventileinrichtung mit dem schaltbaren Steuerventil und dem Relaisventil auf konstruktiv einfach Weise eine pneumatische Backup-Lösung, aufbauend auf herkömmlichen elektropneumatischen Feststellbremsventilanordnungen, ermöglicht wird. Ein weiterer Vorteil ist, dass mit diesem Ansatz auch Nutzfahrzeuge mit einer herkömmlichen elektrischen Feststellbremse nachträglich mit vergleichsweise geringem konstruktivem Aufwand mit einer pneumatischen Backup-Lösung nachrüstbar sind.

Die Variante dieser Ausgestaltungsform mit dem zweiten Steuerventil bietet den Vorzug, dass auf konstruktiv einfacher Weise ebenfalls die Anhängerventileinrichtung rein pneumatisch gesteuert werden kann.

Gemäß einer weiteren Ausführungsvariante kann die bekannte elektropneumatisch steuerbare Ventileinrichtung auch nur mittels des externen Relaisventils und ohne erstes und ohne zweites Steuerventil weitergebildet werden, um die zweite rein pneumatische Betriebsart zu ermöglichen. Dadurch kann die pneumatische Backup-Lösung mit verringertem Kostenaufwand realisiert werden.

Hierzu kann wenigstens eine Versorgungsdruckluftleitung, die den wenigstens einen zweiten Anschluss der Ventileinrichtung mit dem wenigstens einen Federspeicherbremszylinder pneumatisch verbindet, vorgesehen sein. Ferner ist wiederum ein in Bezug auf die elektropneumatische Ventileinrichtung externes Relaisventil vorgesehen, das einen Steuereingang, einen mit der Druckluftquelle verbundenen Arbeitseingang und einen mit dem mindestens einen Federspeicherbremszylinder pneumatisch verbundenen Arbeitsausgang aufweist. Weiterhin ist eine Steuerdruckluftleitung vorgesehen, die mit dem muskelkraftbetätigbaren Bedienelement entlüftbar ist und die mit dem Steuereingang des Relaisventils und mit der Druckluftquelle, vorzugsweise über die Versorgungsleitung der Druckluftquelle, verbunden ist.

Der Arbeitsausgang des externen Relaisventils ist über eine Druckluftleitung mit dem wenigstens einen Federspeicherbremszylinder pneumatisch verbunden ist, wobei die Druckluftleitung in eine Druckkammer oder in die Versorgungsdruckluftleitung des wenigstens einen Federspeicherbremszylinders münden kann.

Bei dieser Ausführungsvariante erfolgt die Belüftung und Entlüftung der Federspeicherbremszylinder in der ersten Betriebsart in herkömmlicher Weise direkt über die elektropneumatische Ventileinrichtung. Dies liegt daran, dass die zweiten Anschlüsse der elektropneumatischen Ventileinrichtung direkt über Druckluftleitungen mit den Druckkammern der Federspeicherbremszylinder pneumatisch gekoppelt sind, so dass zum Belüften der zweite Ausgang mit Druck des Druckvorrats beaufschlagt wird und zum Entlüften der zweite Anschluss über die elektropneumatische Ventileinrichtung mit einer Drucksenke, z. B. mit der Umgebungsluft, verbunden wird.

Gemäß der zweiten, rein pneumatischen Betriebsart wird eine Entlüftung des Steuereingangs des Relaisventils durch eine Betätigung des zweiten muskelkraftbetätigbaren Bedienelements eingeleitet, so dass das Relaisventil in die Entlüftungsstellung schaltet. In der Entlüftungsstellung werden die Federspeicherbremszylinder über die Druckluftleitung, die den Arbeitsausgang des Relaisventils mit den Federspeicherbremszylindern pneumatisch verbindet, entlüftet.

Zur zusätzlichen Steuerung einer Anhängerbremsanlage gemäß der ersten und der zweiten Betriebsart kann ferner eine Versorgungsdruckluftleitung vorgesehen sein, die den dritten Anschluss der elektropneumatischen Ventileinrichtung mit der Anhängerventileinrichtung pneumatisch verbindet.

Gemäß einer weiteren nicht beanspruchten Ausführungsvariante kann durch entsprechende Anpassung einer herkömmlichen elektropneumatischen Ventilanordnung auf das Vorsehen eines zusätzlichen schaltbaren Steuerventils sowie des zusätzlichen externen Relaisventils gemäß der vorstehend beschriebenen Variante vermieden werden.

Stattdessen sieht die Ausführungsvariante vor, dass eine Steuerdruckluftleitung bereitgestellt wird, die mit dem muskelkraftbetätigbaren Bedienelement entlüftbar ist und die mit einem Steuereingang eines Relaisventils der Ventileinrichtung und mit der Versorgungsleitung der Druckluftquelle verbunden ist. Bei dieser Ausführungsvariante wird somit die Tatsache ausgenutzt, dass bekannte elektropneumatische Ventileinrichtungen bereits ein internes Relaisventil aufweisen, über das die an dem zweiten Anschluss bzw. den zweiten Anschlüssen der elektropneumatischen Ventileinrichtung angeschlossene Druckluftleitung bzw. Druckluftleitungen entlüftet werden können.

Hierbei wird vorteilhafterweise an der baulichen Einheit, z. B. am Gehäuse, der elektropneumatischen Ventileinrichtung ein weiterer Anschluss bereitgestellt, über den die Steuerdruckluftleitung an den Steuereingang des internen Relaisventils der Ventileinrichtung pneumatisch angeschlossen werden kann.

Gemäß dieser Variante ist ferner wenigstens eine Versorgungsdruckluftleitung vorgesehen, die den wenigstens einen zweiten Anschluss der Ventileinrichtung mit dem wenigstens einen Federspeicherbremszylinder pneumatisch verbindet.

Gemäß dieser Ausführungsvariante kann die elektropneumatische Ventileinrichtung somit über ihre zweiten Anschlüsse direkt mit den Federspeicherbremszylindern verbunden werden, wie dies auch der Fall bei einer herkömmlichen elektrischen Federspeicherfeststellbremsvorrichtung ohne pneumatische Backup-Lösung der Fall wäre.

Gemäß der vorgenannten Ausführungsvariante kann das interne Relaisventil der elektropneumatischen Ventileinrichtung so ausgelegt sein, dass bei Unterschreiten eines vorgegebenen Mindestdrucks, mit dem der Steuereingang des Relaisventils der Ventileinrichtung beaufschlagt ist, das Relaisventil von einer Durchlassstellung in eine Entlüftungsstellung schaltet, wobei in der Entlüftungsstellung eine an dem zweiten Anschluss der Ventileinrichtung angeschlossene Druckluftleitung mit einem Entlüftungsausgang des Relaisventils pneumatisch verbunden ist.

Gemäß dieser Ausführungsvariante ist somit der Steuereingang des internen Relaisventils der Ventileinrichtung so ausgeführt, dass dieser sowohl elektrisch über die elektrischen Anschlüsse der Ventileinrichtung als auch rein pneumatisch über die zusätzliche Steuerdruckluftleitung, die mit dem Steuereingang des Relaisventils pneumatisch verbunden ist, steuerbar ist.

So kann mittels Betätigung des muskelkraftbetätigbaren Bedienelements eine Entlüftung der Steuerdruckluftleitung eingeleitet werden, die mit der Steuerkammer des internen Relaisventils verbunden ist. Daraufhin wird die Arbeitskammer des internen Relaisventils, die direkt mit den Federspeicherbremszylindern über Druckluftleitungen verbunden ist, ebenfalls entlüftet. Daraufhin wird an den Fahrzeugrädern, an denen die Federspeicherbremszylinder angeordnet sind, eine Bremskraft aufgebaut, und das Fahrzeug kommt zum Stehen bzw. wird festgesetzt.

Eine an dem dritten Anschluss der elektropneumatische steuerbaren Ventileinrichtung angeschlossenen Druckluftleitung zum Anschluss an die Anhängerventileinrichtung kann dann in analoger Weise zu den Druckluftleitungen, die an den zweiten Anschlüssen angeschlossen sind, ebenfalls wahlweise elektropneumatisch oder rein pneumatisch belüftet und entlüftet werden.

Gemäß der Erfindung ist das muskelkraftbetätigbare Bedienelement im Fahrerhaus eines Nutzfahrzeugs angeordnet, so dass der Fahrer auch nach Unterbrechung der Stromversorgung die Feststellbremse, ohne aus dem Fahrerhaus aussteigen zu müssen, einlegen kann. Dies ist besonders vorteilhaft, falls sich das Fahrzeug gerade an einer Steigung befindet.

Ein weiterer Aspekt der Erfindung betrifft ein Nutzfahrzeug mit einer elektrischen Feststellbremsvorrichtung nach einem der vorhergehenden Aspekte.

Weitere Einzelheiten und Vorteile der Erfindung werden im Folgenden unter Bezug auf die beigefügten Zeichnungen beschrieben. Es zeigen:
- Figur 1: eine herkömmliche, aus dem Stand der Technik bekannte elektrische Feststellbremsvorrichtung;
- Figur 2: eine elektrische Feststellbremsvorrichtung gemäß einem ersten Ausführungsbeispiel;
- Figur 3: eine elektrische Feststellbremsvorrichtung gemäß einem zweiten nicht-beanspruchten Ausführungsbeispiel;
- Figur 4: eine elektrische Feststellbremsvorrichtung gemäß einem dritten Ausführungsbeispiel; und
- Figur 5: eine elektrische Feststellbremsvorrichtung gemäß einem vierten Ausführungsbeispiel.

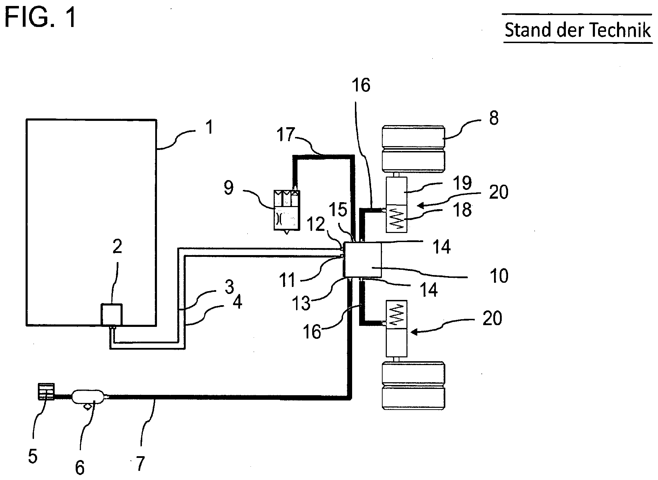

Zunächst wird anhand von Figur 1 schematisch mit einem Blockschaltbild eine aus dem Stand der Technik bekannte elektrische Feststellbremsanlage erläutert. Die Feststellbremsanlage steuert die Feststellbremse über einen Druckmittelkreis.

Der in der Figur 1 dargestellte Teil des Druckmittelkreises umfasst einen Druckmittelvorratsbehälter 6, der über eine Versorgungsleitung 7 pneumatisch mit einem ersten Anschluss 13 einer elektrisch steuerbaren Ventileinrichtung 10 verbunden ist, und ferner eine im Inneren des Fahrerhauses 1 angeordnete erste Parkbremsbedieneinheit 2, die über Leitungen 3, 4 elektrisch mit einer Steuereinheit (nicht gezeigt) der elektropneumatischen Ventileinrichtung 10 verbunden ist.

Die Ventileinrichtung 10 ist über Druckluftleitungen 16 mit den Federspeicherbremszylindern 18 verbunden. Im vorliegenden Beispiel sind die Federspeicherbremszylinder 18 als Teil eines Kombi-Bremszylinders 20, auch Tristop-Zylinder genannt, ausgebildet, der jeweils an einer Radachse des Nutzfahrzeugs angeordnet erst. Der Kombi-Bremszylinder 20 umfasst einen Membranzylinder 19 zur Betätigung der Betriebsbremse und einen Federspeicherbremszylinder 18 zur Betätigung der Feststellbremse. Der Federspeicherbremszylinder 18 weist eine Federkammer mit einer Feder auf sowie eine Druckkammer, die über die Druckluftleitungen 16 mit Druck beaufschlagt oder aber entlüftet werden kann. Die Federspeicherbremszylinder 18 dienen als Aktoreinrichtung, um mechanische Bauteile einer Radbremseinrichtung eines Rades 8 zu betätigen, insbesondere um die mechanischen Bauteile in Eingriff (Federspeicherbremszylinder entlüftet) und/oder außer Eingriff (Federspeicherbremszylinder belüftet) zu bringen.

Der Druckmittelkreis umfasst weitere in Figur 1 links vom Druckmittelvorratsbehälter 6 angeordnete Komponenten, wie beispielsweise ein Vierkreisschutzventil, einen Kompressor, einen Druckregler, etc., von denen zur Vereinfachung der Darstellung in Figur 1 nur das Vierkreisschutzventil 5 dargestellt ist.

Die zur elektropneumatischen Steuerung der Belüftung bzw. Entlüftung der Federspeicherbremszylinder 18 eingesetzte elektropneumatisch steuerbare Ventileinrichtung 10 ist an sich aus dem Stand der Technik bekannt und muss deshalb nicht näher beschrieben werden. An dieser Stelle ist lediglich zu erwähnen, dass die elektropneumatisch steuerbare Ventileinrichtung 10 Anschlüsse 11, 12 für elektrische Steuerleitungen 3, 4, einen ersten Anschluss 13 für eine Versorgungsleitung zur Verbindung der Ventileinrichtung 10 mit einem Druckluftvorrat 6 und weitere Anschlüsse 14, 15 für Druckluftleitungen 16, 17 aufweist. Derartige Ventileinrichtungen 10 können als bauliche Einheit realisiert sein, an der die entsprechenden Anschlüsse 11 bis 15 vorgesehen sind, um die elektrischen und pneumatischen Leitungen an der Ventileinrichtung 10 anzuschließen.

Die Ventileinrichtung 10 ist ausgeführt, im gelösten Zustand der Feststellbremsvorrichtung eine an dem Anschluss 14 angeschlossene Druckluftleitung 16 mit Druck des Druckluftvorrats 6 zu beaufschlagen und zum Einlegen der Feststellbremsvorrichtung die Druckluftleitung 16 zu entlüften. Zur Vereinfachung der Darstellung ist die konkrete Ventilanordnung im Innern der Ventileinrichtung 10, die in üblicher Weise ausgeführt ist, nicht dargestellt. Hierbei ist lediglich festzustellen, dass die Ventilanordnung im Innern der Ventileinrichtung 10 üblicherweise ein Relaisventil (nicht dargestellt) umfasst, das in eine Durchlassstellung (Feststellbremse im nicht eingelegten Zustand) und in eine Entlüftungsstellung (Feststellbremse im eingelegten Zustand) schaltbar ist, wobei in der Entlüftungsstellung eine Arbeitskammer des internen Relaisventils, die über die Druckluftleitung 16 mit dem Federspeicherbremszylinder 18 verbunden ist, über einen Entlüftungsausgang entlüftet wird.

Im vorliegenden Beispiel weist die Feststellbremsventileinrichtung ferner einen Anschluss 15 auf, der dazu vorgesehen ist, mit einer Anhängersteuerventilanordnung 9 verbunden zu werden. Hierbei ist die Ventilanordnung 10 ferner dazu ausgelegt, die Feststellbremse des Nutzfahrzeugs zu betätigen und den Anschluss 15 so mit Druck zu beaufschlagen, dass die Bremsanlage eines an die Anhängersteuerventilanordnung 9 angeschlossenen Anhängers ebenfalls betätigt wird.

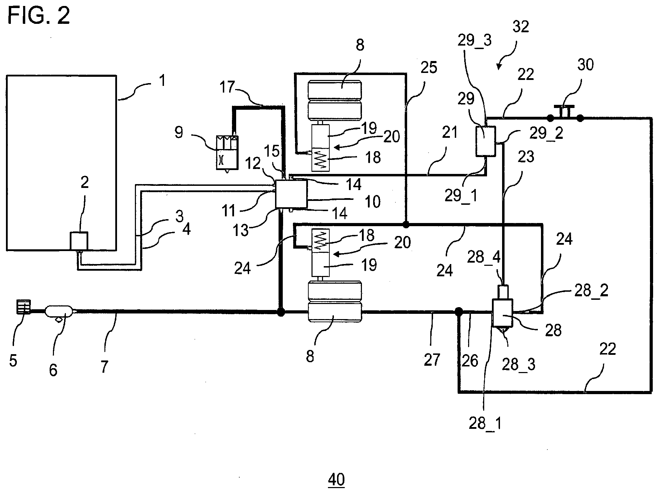

Figur 2 illustriert schematisch mit einem Blockschaltbild ein erstes Ausführungsbeispiel der vorliegenden Erfindung. Hierbei entsprechen Komponenten mit gleichen Bezugszeichen den Komponenten der Figur 1 und werden nicht gesondert beschrieben.

Eine Besonderheit dieses Ausführungsbeispiels liegt darin, dass der in Figur 1 dargestellte Druckmittelkreis, umfassend die elektropneumatisch steuerbare Ventileinrichtung 10, mittels zusätzlicher Komponenten zu einer Feststellbremsventileinrichtung 32 so erweitert und abgewandelt wird, dass eine zweite rein pneumatische Betriebsart der Feststellbremse 40 ermöglicht wird.

Die Feststellbremsventileinrichtung 32 umfasst neben der Ventileinrichtung 10 ferner ein 3/2-Wegeventil 29, ein Relaisventil 28 und ein Handbremsventil 30. Hierzu sind im Unterschied zur Figur 1 die zweiten Anschlüsse 14 der Steuereinrichtung 10 nicht unmittelbar mit den Druckkammern der Federspeicherbremszylinder 18 verbunden. Stattdessen wird an nur einem der Anschlüsse 14 eine Druckluftleitung 21 angebracht, die ferner mit einem ersten Eingang 29_1 des 3/2-Wegeventils 29 verbunden ist. Das 3/2-Wegeventil 29 weist ferner einen mit der Druckluftquelle 6 verbundenen zweiten Eingang 29_3 und einen Ausgang 29_2 auf.

Ferner ist das weitere Relaisventil 28 vorgesehen, das einen mit dem Ausgang 29_2 des Steuerventils 29 verbundenen Steuereingang 28_4, einen mit der Druckluftquelle 6 verbundenen Arbeitseingang 28_1 und einen mit den beiden Federspeicherbremszylindern 18 verbundenen Arbeitsausgang 28_2 aufweist.

Ferner ist ein zweites Bedienelement in Form eines Handbremsventils 30 an der Druckluftleitung 22 und zwischen dem zweiten Eingang 29_3 des Steuerventils 29 und der Druckluftquelle 6 angeordnet. Das 3/2-Wegeventil 29 dient als schaltbares Steuerventil und ist so ausgelegt, dass es denjenigen seiner beiden Eingänge 29_1, 29_3 mit dem Ausgang 29_2 pneumatisch verbindet, der mit dem kleineren Druck beaufschlagt ist. Das 3/2-Wegeventil 29 kann somit im sogenannten "Select-Low-Betriebsmodus" betrieben werden, so dass immer der kleinere der beiden Eingangsdrücke am Ausgang 29_2 anliegt.

Das Relaisventil 28 ist hierbei so ausgelegt, dass bei Unterschreiten eines vorgegebenen Mindestdrucks am Steuereingang 28_4 das Relaisventil 28 von einer Durchlassstellung in eine Entlüftungsstellung schaltet, wobei in der Durchlassstellung der Arbeitseingang 28_1 mit dem Arbeitsausgang 28_2 verbunden ist und in der Entlüftungsstellung der Arbeitsausgang 28_2 mit einem Entlüftungsausgang 28_3 des Relaisventils 28 pneumatisch verbunden ist.

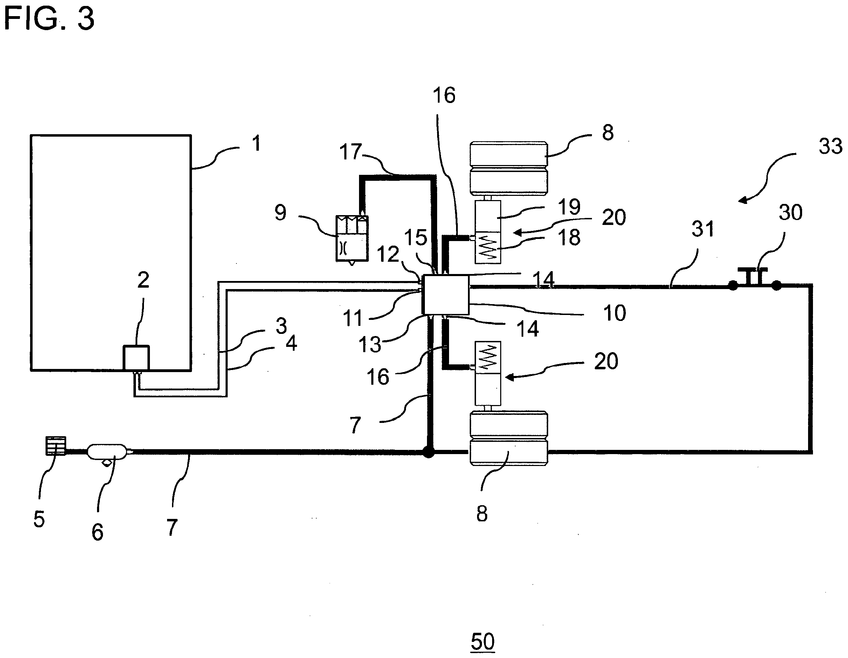

Das Handbremsventil 30 ist ebenfalls im Inneren des Fahrerhauses 1 angeordnet, was in Figur 2 aber nicht dargestellt ist. So führt ein Teilabschnitt der Leitung 22 bis ins Innere des Fahrerhauses 1, wo das Handbremsventil 30 angeordnet ist. Es wird daher betont, dass die Darstellung der Figur 2 und der Figur 3 nur die Verbindungen der einzelnen Luftdruckleitungen mit den Ventilanschlüssen verdeutlichen soll, nicht jedoch den tatsächlichen Verlauf der Leitungen im Fahrzeug darstellt.

Nachfolgend wird beispielhaft die erste und zweite Betriebsart der elektrischen Feststellbremsvorrichtung 40 beschrieben.

Befindet sich das Fahrzeug in einem Zustand mit nicht eingelegter Feststellbremse, beispielsweise im Fahrmodus, dann sind die Druckluftleitungen 7, 17, 21 - 27 und die Federspeicherbremszylinder 18 belüftet, d. h. mit einem Druck der Druckvorratsvorrichtung 6 beaufschlagt, so dass der an den Federspeicherbremszylindern anliegende Luftdruck die Federelemente spannt und dadurch die mechanischen Komponenten der Radbremse außer Eingriff hält. Das Relaisventil 28 befindet sich in der Durchlassstellung.

Solange die Stromversorgung des Bordnetzes intakt ist, kann die Feststellbremse gemäß der ersten Betriebsart elektrisch gesteuert eingelegt werden. Hierzu kann der Fahrer die erste Bedieneinheit 2 im Fahrerhaus betätigen. Die Steuereinheit der Ventileinrichtung 10 ist so ausgeführt, dass diese durch Ansteuerung der internen Ventilanordnung der Ventileinrichtung 10 die Druckluftleitung 21 entlüftet. Die Entlüftung erfolgt hierbei, wie vorstehend bereits erwähnt, über ein internes Relaisventil (nicht dargestellt) der Ventileinrichtung 10, das die Druckluft beim Entlüften über einen Entlüftungsausgang des internen Relaisventils an die Umgebung abgibt.

Da die Druckluftleitung 21 über das 3/2-Wegeventil 29 mit der Druckluftleitung 23 pneumatisch gekoppelt ist, wird die Druckluftleitung 23 dadurch ebenfalls entlüftet.

Durch die Entlüftung der Leitung 23, die am Steuereingang 28_4 des Relaisventils 28 anliegt, schaltet das Relaisventil 28 von einer Durchlassstellung, in der der Arbeitseingang 28_1 mit dem Arbeitsausgang 28_2 in Durchflussstellung ist, in eine Entlüftungsstellung, in der der Arbeitsausgang 28_2 mit einem Entlüftungsausgang 28_3 des Relaisventils 28 pneumatisch verbunden ist.

Dadurch wird die Druckluftleitung 24 und die daran angeschlossene Druckluftleitung 25 entlüftet. Über die Druckluftleitungen 24, 25, die direkt mit dem Federspeicherbremszylinder 18 verbunden sind, werden somit die Federspeicherbremszylinder 18 entlüftet, was ein Einlegen der Feststellbremse bewirkt.

Nachfolgend wird die zweite rein pneumatische Betriebsart beschrieben. Ist die Stromversorgung des Fahrzeugs ausgefallen oder wurde der Batterietrennschalter (Not-Aus-Schalter) betätigt, kann die Ventileinrichtung 10 nicht mehr elektrisch gesteuert werden. Die Feststellbremse kann jedoch mittels des pneumatischen Backupkreises eingelegt werden.

Hierzu wird das Handbremsventil 30 betätigt, um die Druckluftleitung 22 zu entlüften. Die Entlüftung der Druckluftleitung 22 bewirkt eine Aktivierung des 3/2-Wegeventils 29. Da aufgrund der Entlüftung der Eingang 29_3 mit einem kleineren Druck als der Eingang 29_1 beaufschlagt ist, schaltet das 3/2-Wegeventil 29 in eine Stellung, in der der Eingang 29_3 mit dem Ausgang 29_2 verbunden ist. Daraufhin wird die Druckluftleitung 23 ebenfalls entlüftet. Wie vorstehend für die erste Betriebsart bereits beschrieben, bewirkt eine Entlüftung der Druckluftleitung 23 ein Umschalten des Relaisventils 28 in die Entlüftungsstellung, so dass die Druckluftleitung 24 und damit auch die Druckluftleitung 25 entlüftet werden, was wiederum zu einer Entlüftung der Federspeicherbremszylinder 18 und zum Aufbau einer Bremskraft an den relevanten Fahrzeugrädern 8 führt.

Die Deaktivierung der Feststellbremse erfolgt durch erneutes Betätigen des Handbremsventils 30 bzw. durch Belüften der vorgenannten Druckluftleitungen nebst Federspeicherbremszylindern 18.

Das vorgenannte Funktionsprinzip ist ferner durch die Installation eines weiteren 3/2-Wegeventils auf die Anhängersteuerung 9 erweiterbar, was aus Übersichtsgründen nicht dargestellt ist.

Figur 3 zeigt schematisch ein weiteres nicht-beanspruchtes Ausführungsbeispiel einer elektrischen Feststellbremsvorrichtung 50 mit einer Feststellbremsventileinrichtung 33. Hierbei entsprechen Komponenten mit gleichen Bezugszeichen wiederum den Komponenten der Figur 1 oder 2 und werden nicht gesondert beschrieben. Die Ventileinrichtung 10 der Figur 3 unterscheidet sich jedoch von der Ventileinrichtung 10 der Figur 1, wie nachfolgend erläutert wird.

Bei dieser Ausführungsvariante sind die zweiten Anschlüsse 14 bzw. der dritten Anschluss 15 der Ventileinrichtung 10 über die Druckluftleitungen 16 bzw. die Druckluftleitung 17 in herkömmlicher Weise wie in Figur 1 direkt mit den Federspeicherbremszylindern 18 bzw. mit der Anhängerventileinrichtung 9 pneumatisch verbunden.

Eine Besonderheit dieses Ausführungsbeispiel liegt darin, das ferner eine Steuerdruckluftleitung 31 vorgesehen ist, die mit dem Handbremsventil 30 entlüftbar ist und die mit einem Steuereingang bzw. der Steuerkammer eines Relaisventils (nicht gezeigt) der Ventileinrichtung 10 und mit der Versorgungsleitung 7 der Druckluftquelle pneumatisch verbunden ist. Es wurde vorstehend bereits erwähnt, dass die Ventileinrichtung 10 ein internes Relaisventil umfasst, über das die Druckluftleitungen 16, 17 belüftet und entlüftet werden können.

Befindet sich das Fahrzeug in einem Zustand mit nicht eingelegter Feststellbremse, beispielsweise im Fahrstellung, dann sind die Druckluftleitungen 7, 16, 17, und 31 und die Federspeicherbremszylinder 18 belüftet, d. h. mit einem Druck der Druckvorratsvorrichtung 6 beaufschlagt, so dass der an den Federspeicherbremszylindern anliegende Luftdruck die Federelemente spannt und dadurch die mechanischen Komponenten der Radbremse außer Eingriff hält.

Gemäß der ersten Betriebsart erzeugt bei normaler Stromversorgung die Bedieneinheit 2 im Fahrerhaus bei Betätigung ein elektrisches Signal, das über die Steuerleitungen 3, 4 an die Steuereinheit 10 übertragen wird. Bei Empfang dieses Signals ist die Steuereinheit 10 ausgelegt, über die Anschlüsse 14, 15 die Druckluftleitungen 16, 17 und damit die Federspeicherbremszylinder 18 bzw. die Leitung 17 zur Anhängerventileinrichtung 9 zu entlüften. Hierbei erfolgt die Entlüftung über das interne Relaisventil der Ventilanordnung 10, das von der Steuereinheit der Ventileinrichtung 10 in eine Entlüftungsstellung geschaltet wird, so dass die Druckluft an die Umgebung abgegeben werden kann.

Bei einer zweiten Betriebsart, z. B. nach Unterbrechung einer Stromversorgung, kann mittels einer Betätigung des zweiten Betätigungselements 30, das ebenfalls im Fahrerhaus 2 angeordnet ist, eine Entlüftung der Druckluftleitung 31 eingeleitet werden. Die Druckluftleitung 31 ist, wie vorstehend beschrieben, mit der Steuerkammer des internen Relaisventils der Steuereinheit 10 verbunden. Die Entlüftung der Druckluftleitung 31 bewirkt eine Absenkung des Drucks in der Steuerkammer des internen Relaisventils, wodurch die Arbeitskammer des Relaisventils, die direkt mit den Federspeicherbremszylindern 18 über die Druckluftleitungen 16 verbunden ist, ebenfalls entlüftet wird. An den relevanten Fahrzeugrädern wird daraufhin eine Bremskraft aufgebaut, und das Fahrzeug kommt zum Stehen bzw. wird festgesetzt.

Ist die Arbeitskammer des internen Relaisventils in der Entlüftungsstellung nicht nur mit den Anschlüssen 16, sondern auch mit dem Anschluss 17 für das Anhängerventil verbunden, kann in der zweiten Betriebsart auch die Bremsanlage des Anhängerfahrzeugs betätigt werden.

Eine Deaktivierung der Feststellbremse erfolgt durch erneutes Betätigen des Bedienelements 30 bzw. durch Belüften der vorgenannten Druckluftleitungen nebst Federspeicherbremszylindern 18.

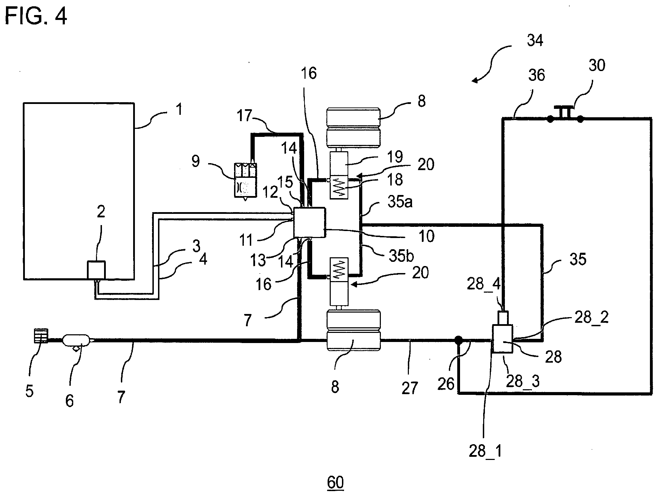

Figur 4 zeigt schematisch ein weiteres Ausführungsbeispiel einer elektrischen Feststellbremsvorrichtung 60 mit einer Feststellbremsventileinrichtung 34. Hierbei entsprechen Komponenten mit gleichen Bezugszeichen wiederum den Komponenten der vorherigen Figuren und werden nicht gesondert beschrieben.

Bei dieser Ausführungsvariante sind die zweiten Anschlüsse 14 der Ventileinrichtung 10 über die Druckluftleitungen 16 wiederum in herkömmlicher Weise wie in Figur 1 oder Figur 3 direkt mit den Federspeicherbremszylindern 18 verbunden.

Die Feststellbremsventileinrichtung 34 umfasst neben der elektropneumatischen Ventileinrichtung 10 ferner ein hierzu externes Relaisventil 28, das einen Steuereingang 28_4, einen mit der Druckluftquelle 6 über die Leitungen 26 und 27 pneumatisch verbundenen Arbeitseingang 28_1 und einen mit den beiden Federspeicherbremszylindern 18 pneumatisch verbundenen Arbeitsausgang 28_2 aufweist. Ferner ist eine Steuerdruckluftleitung 36 vorgesehen, die mit dem muskelkraftbetätigbaren Bedienelement 30 entlüftbar ist und die mit dem Steuereingang des Relaisventils 28 und mit der Druckluftquelle 6 über die Druckluftleitungen 26, 27 und 7 verbunden ist.

Der Arbeitsausgang 28_2 des Relaisventils ist über die Druckluftleitung 35 mit den beiden Federspeicherbremszylindern 18 pneumatisch verbunden, wobei die Druckluftleitung 35 sich zu den beiden Federspeicherbremszylindern 18 hin verzweigt (Leitungen 35a, 35b) und direkt in die jeweilige Druckkammer der Federspeicherbremszylinder 18 mündet. Die Leitungen 35a, 35b können alternativ auch direkt mit der Leitung 16 pneumatisch verbunden werden.

Hierbei ist das Relaisventil 28 wiederum so ausgelegt, dass es bei Unterschreiten eines vorgegebenen Mindestdrucks, mit dem der Steuereingang 28_4 beaufschlagt ist, das Relaisventil 28 von einer Durchlassstellung in eine Entlüftungsstellung schaltet, wobei in der Entlüftungsstellung der Arbeitsausgang 28_2 mit einem Entlüftungsausgang 28_3 des Relaisventils pneumatisch verbunden ist.

Die erste Betriebsart erfolgt analog zu dem in Figur 3 gezeigten Ausführungsbeispiel, in dem die Federspeicherbremszylinder über die Leitungen 16 und das interne Relaisventil (nicht gezeigt) der Ventileinrichtung 10 entlüftet werden.

Bei der zweiten, rein pneumatischen Betriebsart wird eine Entlüftung der Druckluftleitung 36 wiederum durch eine Betätigung des Handbremsventils 30 eingeleitet, um die Druckluftleitung 36 zu entlüften. Dies führt zu einem Absinken des Drucks am Steuereingang 28_4, so dass das Relaisventil 28 in die Entlüftungsstellung schaltet. In der Entlüftungsstellung wird die Druckluftleitung 35 mit den Abschnitten 35a, 35b und damit die Federspeicherbremszylinder 18 entlüftet. Hierbei erfolgt zudem eine langsame Entlüftung des gesamten Vorrats im Druckluftvorrat 6, eingeschränkt durch die Schutzfunktion des Vierkreisventils 5 für die anderen Kreise, da die Ventileinrichtung 10, insbesondere das interne Relaisventil, noch auf Durchlass geschaltet ist.

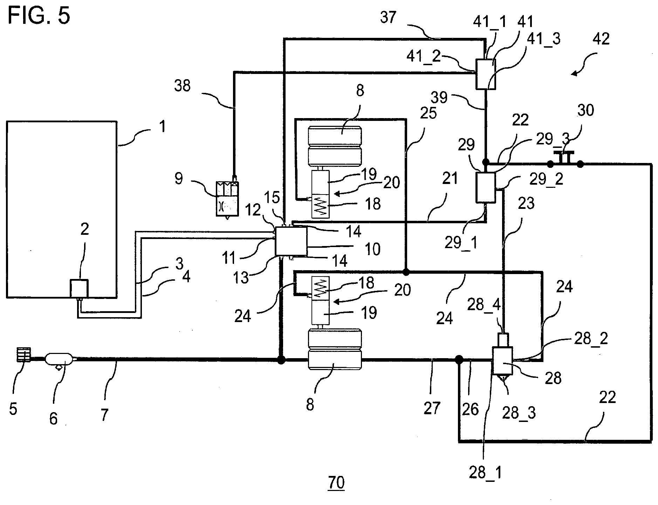

Figur 5 zeigt schematisch ein weiteres Ausführungsbeispiel einer elektrischen Feststellbremsvorrichtung 70 mit einer Feststellbremsventileinrichtung 42. Das Ausführungsbeispiel ist eine Abwandlung des in der Figur 2 gezeigten Ausführungsbeispiels, um zusätzlich eine Anhängerventileinrichtung 9 und eine daran angeschlossene Anhängerbremsanlage (nicht gezeigt) in der zweiten Betriebsart rein pneumatisch betätigen zu können. Hierbei entsprechen Komponenten mit gleichen Bezugszeichen den Komponenten der Figur 2 und werden nicht gesondert beschrieben.

Die elektrische Feststellbremsvorrichtung 70 weist zusätzlich ein schaltbares zweites 3/2-Wegeventill 41 auf, das einen mit dem Anschluss 15 der Ventileinrichtung 10 verbundenen ersten Eingang 41_1, einen zweiten Eingang 41_3, der über die Druckluftleitung 39 mit dem zweiten Eingang 29_3 des ersten 3/2-Wegeventils 29 verbunden ist, und einen mit der Anhängerventileinrichtung 9 verbundenen Ausgang 41_2 aufweist.

Wie das erste 3/2-Wegeventil 29 ist das zweite Wegeventil 41 so ausgelegt, dass es denjenigen seiner beiden Eingänge 41_1, 41_3 mit dem Ausgang 41_2 pneumatisch verbindet, der mit dem kleineren Druck beaufschlagt ist.

In der ersten, elektropneumatischen Betriebsart erfolgt die Belüftung und Entlüftung der Anhängerventileinrichtung bzw. der Anhängerbremsanlage in herkömmlicher Weise direkt über die elektropneumatische Ventileinrichtung 10. Im Normalbetrieb mit elektrischer Stromversorgung und nicht eingelegter Feststellbremse ist das zweite 3/2-Wegeventil 41 in einer Durchlassstellung geschaltet, die den ersten Eingang 41_1 mit dem Ausgang 41_2 des 3/2-Wegeventils 41 verbindet, solange die am zweiten Eingang 41_3 angeschlossenen Druckluftleitung 39 belüftet ist und nicht mittels des Handbremsventils 30 entlüftet wurde. In dieser Durchlassstellung ist somit der Anschluss 15 der elektropneumatischen Ventileinrichtung 10 über den ersten Eingang 41_1 und den Ausgang 41_2 des schaltbaren zweiten Steuerventils 41 mit der Anhängerventileinrichtung 9 pneumatisch verbunden ist. Die Ventileinrichtung 9 kann somit in bekannter Weise direkt über die Ventileinrichtung 10 durch entsprechende Ansteuerung ihres nicht dargestellten internen Relaisventils belüftet und entlüftet werden.

Bei Ausfall oder Abschalten der Stromversorgung kann auch die elektrische Feststellbremsvorrichtung 70 in der zweiten Betriebsart rein pneumatisch betätigt werden. Hierbei wird wiederum das Handbremsventil 30 manuell in die geöffnete Stellung gebracht, so dass die Druckluftleitung 22 und damit die Druckluftleitung 29 entlüftet werden. Dadurch sinkt der Leitungsdruck am zweiten Eingang 41_3 des zweiten 3/2-Wegeventils 41, wodurch diese aktiviert wird und den zweiten Eingang 41_3 mit dem Ausgang 41_2 pneumatisch koppelt. Folglich wird die am Ausgang 41_2 des zweiten 3/2-Wegeventils 41 angeschlossene Druckluftleitung 38 über das zweite 3/2-Wegeventil 41 und die Druckluftleitungen 39 und 22 entlüftet. Die Entlüftung der Federspeicherbremszylinder erfolgt auf dieselbe Weise wie in Zusammenhang mit Figur 2 beschrieben.

Obwohl die Erfindung unter Bezugnahme auf bestimmte Ausführungsbeispiele beschrieben worden ist, ist eine Vielzahl von Varianten und Abwandlungen möglich, die ebenfalls von dem Erfindungsgedanken Gebrauch machen und deshalb in den Schutzbereich fallen. Folglich soll die Erfindung nicht auf die offenbarten bestimmten Ausführungsbeispiele begrenzt sein, sondern die Erfindung soll alle Ausführungsbeispiele umfassen, die in den Bereich der beigefügten Patentansprüche fallen.

### Bezugszeichenliste

- 1: Fahrerhaus
- 2: Bedieneinheit für erste Betriebsart
- 3, 4: Elektrische Steuerleitungen
- 5: Vierkreisschutzventil
- 6: Druckmittelvorratsbehälter
- 7: Vorratsleitung
- 8: Fahrzeugrad
- 9: Anhängersteuerventileinrichtung
- 10: Elektropneumatisch steuerbare Ventileinrichtung
- 11, 12: Anschlüsse für elektrische Leitungen
- 13: Anschluss für Versorgungsleitung
- 14, 15: Anschlüsse für Druckluftleitungen
- 16, 17: Druckluftleitungen
- 18: Federspeicherbremszylinder
- 19: Membranzylinder
- 20: Kombi-Bremszylinder
- 21-27, 35, 35a, 35b, 36-39: Druckluftleitungen
- 28: Relaisventil
- 28_1: Arbeitseingang
- 28_2: Arbeitsausgang
- 28_3: Entlüftungsausgang
- 28_4: Steuereingang
- 29,41: 3/2-Wegeventil
- 29_1, 41_1: Erster Eingang
- 29_2, 41_2: Ausgang
- 29_3, 41_3: Zweiter Eingang
- 30: Muskelkraftbetätigbares Betätigungselement
- 31: Druckluftleitung
- 32, 33, 34, 42: Feststellbremsventilanordnung
- 40, 50, 60, 70: Elektrische Feststellbremsvorrichtung

## Patentansprüche

1. Elektrische Feststellbremsvorrichtung (40; 50; 60; 70) für ein Fahrzeug, vorzugsweise für ein Nutzfahrzeug, umfassend
eine Feststellbremsventilanordnung (32; 33; 34; 42); und
wenigstens einen Federspeicherbremszylinder (18), der über eine Versorgungsleitung (7) und die Feststellbremsventilanordnung (32; 33; 34; 42) mit einer Druckluftquelle (6) verbindbar ist, der im gelösten Zustand der Feststellbremsvorrichtung mit Druck der Druckluftquelle (6) über die Feststellbremsventilanordnung beaufschlagt ist und im eingelegten Zustand der Feststellbremsvorrichtung über die Feststellbremsventilanordnung mit einer Drucksenke verbindbar ist;
wobei die Feststellbremsventilanordnung dazu ausgelegt ist, zum Einlegen des gelösten oder eingelegten Zustands in einer ersten Betriebsart elektropneumatisch gesteuert zu werden;
wobei die Feststellbremsventilanordnung ein im Fahrerhaus (1) eines Nutzfahrzeugs angeordnetes muskelkraftbetätigbares Bedienelement (30) umfasst und weiterhin dazu ausgelegt ist, zum Einlegen des gelösten oder eingelegten Zustands in einer zweiten Betriebsart unter Verwendung des muskelkraftbetätigbaren Bedienelements (30) rein pneumatisch gesteuert zu werden;
wobei die Feststellbremsventilanordnung (32; 33; 34) eine elektropneumatisch steuerbare Ventileinrichtung (10) umfasst, aufweisend Anschlüsse (11, 12) für elektrische Steuerleitungen (3,4), einen ersten Anschluss (13) für eine Versorgungsleitung zur Verbindung der Ventileinrichtung (10) mit der Druckluftquelle (6), wenigstens einen zweiten Anschluss (14) für eine Druckluftleitung (16) zum Verbinden der elektro-pneumatischen Ventileinrichtung (10) mit einem oder mehreren Federspeicherbremszylindern (18), wobei die Ventileinrichtung (10) ausgelegt ist, im gelösten Zustand der Feststellbremsvorrichtung eine an dem wenigstens einen zweiten Anschluss (14) angeschlossene Druckluftleitung (16) mit Druck der Druckluftquelle (6) zu beaufschlagen und zum Einlegen der Feststellbremsvorrichtung die am wenigstens einen zweiten Anschluss (14) angeschlossene Druckluftleitung (16) zu entlüften, wobei die elektropneumatisch steuerbare Ventileinrichtung (10) in einer baulichen Einheit bereitgestellt wird;
**wobei:**
Variante i):
i.a) ein schaltbares erstes Steuerventil (29), das einen mit dem wenigstens einen zweiten Anschluss (14) der Ventileinrichtung (10) verbundenen ersten Eingang (29_1), einen mit der Druckluftquelle (6) verbundenen zweiten Eingang (29_3) und einen Ausgang (29_2) aufweist; und
i.b) ein in Bezug auf die elektropneumatische Ventileinrichtung externes Relaisventil (28), das einen mit dem Ausgang (29_2) des ersten Steuerventils (29) verbundenen Steuereingang (28_4), einen mit der Druckluftquelle (6) verbundenen Arbeitseingang (28_1) und einen mit dem mindestens einen Federspeicherbremszylinder (18) verbundenen Arbeitsausgang (28_2) aufweist; wobei das muskelkraftbetätigbare Bedienelement (30) die Druckluftleitung (22) entlüften kann und es zwischen dem zweiten Eingang (29_3) des ersten Steuerventils und der Druckluftquelle (6) angeordnet ist;
oder Variante ii):
ii.a) wenigstens eine Versorgungsdruckluftleitung (16), die den wenigstens einen zweiten Anschluss (14) der Ventileinrichtung (10) mit dem wenigstens einen Federspeicherbremszylinder (18) pneumatisch verbindet; und
ii.b) ein in Bezug auf die elektropneumatische Ventileinrichtung externes Relaisventil (28), das einen Steuereingang (28_4), einen mit der Druckluftquelle (6) verbundenen Arbeitseingang (28_1) und einen mit dem mindestens einen Federspeicherbremszylinder (18) pneumatisch verbundenen Arbeitsausgang (28_2) aufweist; und
ii.c) eine Steuerdruckluftleitung (36), die mit dem muskelkraftbetätigbaren Bedienelement (30) entlüftbar ist und die mit dem Steuereingang des Relaisventils (28) und mit der Druckluftquelle (6), vorzugsweise über die Versorgungsleitung (7) der Druckluftquelle (6), verbunden ist.

2. Elektrische Feststellbremsvorrichtung (40; 50; 60; 70) nach Anspruch 1, **dadurch gekennzeichnet,**
**dass** die elektropneumatisch steuerbare Ventileinrichtung (10) einen dritten Anschluss (15) zum Verbinden der elektropneumatischen Ventileinrichtung (10) mit einer Anhängerventileinrichtung (9) aufweist, wobei die Ventileinrichtung (10) ausgelegt ist, im gelösten Zustand der Feststellbremsvorrichtung eine an dem wenigstens einen dritten Anschluss (15) angeschlossene Druckluftleitung (17) mit Druck der Druckluftquelle (6) zu beaufschlagen und zum Einlegen der Feststellbremsvorrichtung die am wenigstens einen dritten Anschluss (15) angeschlossene Druckluftleitung (17) zu entlüften.

3. Elektrische Feststellbremsvorrichtung (70) nach Anspruch 1 oder 2 gemäß Variante i), **gekennzeichnet durch** ein schaltbares zweites Steuerventil (41), das einen mit dem dritten Anschluss (15) der Ventileinrichtung (10) verbundenen ersten Eingang (41_1), einen mit der am zweiten Eingang (29_3) des ersten Steuerventils (29) angeschlossenen und mittels des muskelkraftbetätigbaren Bedienelements (30) entlüftbaren Druckluftleitung (22) verbundenen zweiten Eingang (41_3) und einen mit der Anhängerventileinrichtung (9) verbundenen Ausgang (41_2) aufweist.

4. Elektrische Feststellbremsvorrichtung (40; 70) nach einem der vorherigen Ansprüche gemäß Variante i), **dadurch gekennzeichnet,**
(a) **dass** das erste Steuerventil (29) und/oder das zweite Steuerventil (41) ein 3/2-Wegeventil ist; und/oder
(b) **dass** das erste Steuerventil (29) und/oder das zweite Steuerventil (41) so ausgelegt ist, dass es denjenigen seiner beiden Eingänge mit dem Ausgang pneumatisch verbindet, der mit dem kleineren Druck beaufschlagt ist.

5. Elektrische Feststellbremsvorrichtung (60) nach Anspruch 1 oder 2 gemäß Variante ii), **dadurch gekennzeichnet, dass** der Arbeitsausgang (28_2) des Relaisventils über eine Druckluftleitung (35) mit dem wenigstens einen Federspeicherbremszylinder (18) pneumatisch verbunden ist, wobei die Druckluftleitung (35) in eine Druckkammer oder in die Versorgungsdruckluftleitung (16) des wenigstens einen Federspeicherbremszylinders (18) mündet.

6. Elektrische Feststellbremsvorrichtung (60) nach einem der Ansprüche 1, 2 oder 5 gemäß Variante ii), **gekennzeichnet durch** eine Versorgungsdruckluftleitung (17), die den dritten Anschluss (15) der Ventileinrichtung (10) mit der Anhängerventileinrichtung (9) pneumatisch verbindet.

7. Elektrische Feststellbremsvorrichtung (40; 60; 70) nach einem der Ansprüche 1 bis 6 gemäß der Varianten i) oder ii), **dadurch gekennzeichnet, dass** das Relaisventil (28) so ausgelegt ist, dass es bei Unterschreiten eines vorgegebenen Mindestdrucks, mit dem der Steuereingang (28_4) beaufschlagt ist, das Relaisventil (28) von einer Durchlassstellung in eine Entlüftungsstellung schaltet, wobei in der Entlüftungsstellung der Arbeitsausgang (28_2) mit einem Entlüftungsausgang (28_3) des Relaisventils pneumatisch verbunden ist.

8. Nutzfahrzeug mit einer elektrischen Feststellbremsvorrichtung (40; 50; 60; 70) nach einem der vorhergehenden Ansprüche.

## Claims

1. An electric holding brake apparatus (40; 50; 60; 70) for a vehicle, preferably for a commercial vehicle, comprising
a holding brake valve arrangement (32; 33; 34; 42); and
at least one spring brake cylinder (18), which can be connected via a supply line (7) and the holding brake valve arrangement (32; 33; 34; 42) to a compressed air source (6), which is supplied with pressure from the compressed air source (6) via the holding brake valve arrangement in the released state of the holding brake apparatus and which can be connected via the holding brake valve arrangement to a pressure sink in the applied state of the holding brake apparatus;
wherein the holding brake valve arrangement is designed to be controlled electropneumatically in order to select the released or applied state in a first mode of operation;
wherein the holding brake valve arrangement comprises a muscle-powered operating element (30) that is arranged in the cab (1) of a commercial vehicle, and is furthermore designed to be controlled purely pneumatically, using the muscle-powered operating element (30), in order to select the released or applied state in a second mode of operation;
wherein the holding brake valve arrangement (32; 33; 34) comprises an electropneumatically controllable valve device (10), having connections (11, 12) for electric control lines (3, 4), a first connection (13) for a supply line for connecting the valve device (10) to the compressed air source (6), at least one second connection (14) for a compressed air line (16) for connecting the electropneumatic valve device (10) to one or more spring brake cylinders (18), wherein the valve device (10) is designed to supply a compressed air line (16) connected to the at least one second connection (14) with pressure from the compressed air source (6) in the released state of the holding brake apparatus and to vent the compressed air line (16) connected to the at least one second connection (14) in order to apply the holding brake apparatus, wherein the electropneumatically controllable valve device (10) is supplied in a constructional unit,
**characterized by**
variant i):
i.a) a switchable first control valve (29), which has a first inlet (29_1) connected to the at least one second connection (14) of the valve device (10), a second inlet (29_3) connected to the compressed air source (6) and an outlet (29_2); and
i.b) a relay valve (28), which is an external relay valve which respect to the electropneumatic valve device, and which has a control inlet (28_4) connected to the outlet (29_2) of the first control valve (29), a working inlet (28_1) connected to the compressed air source (6), and a working outlet (28_2) connected to the at least one spring brake cylinder (18); wherein the muscle-powered operating element (30) can vent the compressed air line (22) and it is arranged between the second inlet (29_3) of the first control valve and the compressed air source (6);
or variant ii):
ii.a) at least one supply compressed air line (16), which pneumatically connects the at least one second connection (14) of the valve device (10) to the at least one spring brake cylinder (18); and
ii.b) a relay valve (28), which is an external relay valve which respect to the electropneumatic valve device, and which has a control inlet (28_4), a working inlet (28_1) connected to the compressed air source (6), and a working outlet (28_2) pneumatically connected to the at least one spring brake cylinder (18); and
ii.c) a control compressed air line (36), which can be vented by means of the muscle-powered operating element (30) and is connected to the control inlet of the relay valve (28) and to the compressed air source (6), preferably via the supply line (7) of the compressed air source (6).

2. The electric holding brake apparatus (40; 50; 60; 70) according to Claim 1, **characterized**
**in that** the electropneumatically controllable valve device (10) has a third connection (15) for connecting the electropneumatic valve device (10) to a trailer valve device (9), wherein the valve device (10) is designed to supply a compressed air line (17) connected to the at least one third connection (15) with pressure from the compressed air source (6) in the released state of the holding brake apparatus and to vent the compressed air line (17) connected to the at least one third connection (15) in order to apply the holding brake apparatus.

3. The electric holding brake apparatus (70) according to Claim 1 or 2 according to variant i), **characterized by** a switchable second control valve (41), which has a first inlet (41_1) connected to the third connection (15) of the valve device (10), a second inlet (41_3) connected to the compressed air line (22) that is connected to the second inlet (29_3) of the first control valve (29) and can be vented by means of the muscle-powered operating element (30), and an outlet (41_2) connected to the trailer valve device (9).

4. The electric holding brake apparatus (40; 70) according to one of the preceding claims according to variant i), **characterized**
(a) **in that** the first control valve (29) and/or the second control valve (41) is/are a 3/2-way valve/s; and/or
(b) **in that** the first control valve (29) and/or the second control valve (41) is/are designed in such a way that it/they pneumatically connect/s to the outlet that of its/their two inlets which is supplied with the lower pressure.

5. The electric holding brake apparatus (60) according to Claim 1 or 2 according to variant ii), **characterized in that** the working outlet (28_2) of the relay valve is pneumatically connected via a compressed air line (35) to the at least one spring brake cylinder (18), wherein the compressed air line (35) opens into a pressure chamber or into the supply compressed air line (16) of the at least one spring brake cylinder (18).

6. The electric holding brake apparatus (60) according to one of Claims 1, 2 and 5 according to variant ii), **characterized by** a supply compressed air line (17), which pneumatically connects the third connection (15) of the valve device (10) to the trailer valve device (9).

7. The electric holding brake apparatus (40; 60; 70) according to one of Claims 1 to 6 according to variants i) and ii), **characterized in that** the relay valve (28) is designed in such a way that, when a predetermined minimum pressure with which the control inlet (28_4) is supplied is undershot, the relay valve (28) switches from a through flow position to a venting position, wherein the working outlet (28_2) is pneumatically connected to a venting outlet (28_3) of the relay valve in the venting position.

8. A commercial vehicle having an electric holding brake apparatus (40; 50; 60; 70) according to one of the preceding claims.

## Revendications

1. Dispositif de frein de stationnement électrique (40; 50; 60; 70) pour un véhicule, en particulier pour un véhicule utilitaire, comprenant
un agencement de vannes de frein de stationnement (32; 33; 34; 42); et
un cylindre de frein à ressort (18), qui peut être raccordé à une source d'air comprimé (6) par une conduite d'alimentation (7) et l'agencement de vannes de frein de stationnement (32; 33; 34; 42), qui dans l'état desserré du dispositif de frein de stationnement est soumis à la pression de la source d'air comprimé (6) par l'agencement de vannes de frein de stationnement et dans l'état serré du dispositif de frein de stationnement peut être raccordé à un puits de pression par l'agencement de vannes de frein de stationnement;
dans lequel l'agencement de vannes de frein de stationnement est conçu pour être commandé de façon électropneumatique dans un premier mode de fonctionnement pour engager l'état desserré ou serré;
dans lequel l'agencement de vannes de frein de stationnement comprend un élément de commande (30) actionnable par la force musculaire disposé dans la cabine de conduite (1) d'un véhicule utilitaire, et est en outre conçu pour être commandé de façon purement pneumatique pour engager l'état desserré ou serré dans un deuxième mode de fonctionnement avec utilisation de l'élément de commande (30) actionnable par la force musculaire;
dans lequel l'agencement de vannes de frein de stationnement (32; 33; 34) comprend un dispositif de vanne à commande électropneumatique (10), présentant des raccords (11, 12) pour des lignes de commande électriques (3, 4), un premier raccord (13) pour une conduite d'alimentation pour le raccordement du dispositif de vanne (10) à la source de pression (6), au moins un deuxième raccord (14) pour une conduite d'air comprimé (16) pour raccorder le dispositif de vanne électropneumatique (10) à un ou plusieurs cylindre(s) de frein à ressort (18), dans lequel le dispositif de vanne (10) est conçu pour, dans l'état desserré du dispositif de frein de stationnement, soumettre à la pression de la source d'air comprimé (6) une conduite d'air comprimé (16) raccordée audit au moins un deuxième raccord (14) et pour purger la conduite d'air comprimé (16) raccordée audit au moins un deuxième raccord (14) pour serrer le dispositif de frein de stationnement, et le dispositif de vanne à commande électropneumatique (10) est fourni sous la forme d'une unité de construction;
**caractérisé par**
Variante i):
i.a) une première vanne de commande commutable (29), qui présente une première entrée (29_1) raccordée audit au moins un deuxième raccord (14) du dispositif de vanne (10), une deuxième entrée (29_3) raccordée à la source d'air comprimé (6) et une sortie (29_2); et
i.b) une vanne relais (28), qui est externe par rapport au dispositif de vanne électropneumatique et qui présente une entrée de commande (28_4) raccordée à la sortie (29_2) de la première vanne de commande (29), une entrée de travail (28_1) raccordée à la source d'air comprimé (6) et une sortie de travail (28_2) raccordée audit au moins un cylindre de frein à ressort (18); dans lequel l'élément de commande (30) actionnable par la force musculaire peut purger la conduite d'air comprimé (22) et il est disposé entre la deuxième entrée (29_3) de la première vanne de commande et la source d'air comprimé (6);
ou Variante ii):
ii.a) au moins une conduite d'air comprimé d'alimentation (16), qui relie de façon pneumatique ledit au moins un deuxième raccord (14) du dispositif de vanne (10) audit au moins un cylindre de frein à ressort (18); et
ii.b) une vanne relais (28), qui est externe par rapport au dispositif de vanne électropneumatique, et qui présente une entrée de commande (28_4), une entrée de travail (28_1) raccordée à la source d'air comprimé (6) et une sortie de travail (28_2) raccordée de façon pneumatique audit au moins un cylindre de frein à ressort (18); et
ii.c) une conduite d'air comprimé de commande (36), qui peut être purgée avec l'élément de commande (30) actionnable par la force musculaire et qui est raccordée à l'entrée de commande de la vanne relais (28) et à la source d'air comprimé (6), de préférence par la conduite d'alimentation (7) de la source d'air comprimé (6).

2. Dispositif de frein de stationnement électrique (40; 50; 60; 70) selon la revendication 1, **caractérisé en ce que**:
le dispositif de vanne à commande électropneumatique (10) présente un troisième raccord (15) pour raccorder le dispositif de vanne à commande électropneumatique (10) à un dispositif de vanne de remorque (9), dans lequel le dispositif de vanne (10) est conçu pour, dans l'état desserré du dispositif de frein de stationnement, soumettre à la pression de la source d'air comprimé (6) une conduite d'air comprimé (17) raccordée audit au moins un troisième raccord (15) et pour purger la conduite d'air comprimé (17) raccordée audit au moins un troisième raccord (15) pour serrer le dispositif de frein de stationnement.

3. Dispositif de frein de stationnement électrique (70) selon la revendication 1 ou 2 selon la variante i), **caractérisé par** une deuxième vanne de commande commutable (41), qui présente une première entrée (41_1) raccordée au troisième raccord (15) du dispositif de vanne (10), une deuxième entrée (41_3) raccordée à la conduite d'air comprimé (22) raccordée à la deuxième entrée (29_3) de la première vanne de commande (29) et pouvant être purgée au moyen de l'élément de commande (30) actionnable par la force musculaire et une sortie (41_2) raccordée au dispositif de vanne de remorque (9).

4. Dispositif de frein de stationnement électrique (40; 70) selon l'une quelconque des revendications précédentes selon la variante i), **caractérisé en ce que**
(a) la première vanne de commande (29) et/ou la deuxième vanne de commande (41) est une vanne à 3/2 voies; et/ou
(b) la première vanne de commande (29) et/ou la deuxième vanne de commande (41) est configurée de telle manière qu'elle relie de façon pneumatique à la sortie celle de ses deux entrées, qui est soumise à la plus faible pression.

5. Dispositif de frein de stationnement électrique (60) selon la revendication 1 ou 2 selon la variante ii), **caractérisé en ce que** la sortie de travail (28_2) de la vanne relais est raccordée de façon pneumatique par la conduite d'air comprimé (35) audit au moins un cylindre de frein à ressort (18), dans lequel la conduite d'air comprimé (35) débouche dans une chambre sous pression ou dans la conduite d'air comprimé d'alimentation (16) dudit au moins un cylindre de frein à ressort (18).

6. Dispositif de frein de stationnement électrique (60) selon l'une quelconque des revendications 1, 2 ou 5 selon la variante ii), **caractérisé par** une conduite d'air comprimé d'alimentation (17), qui relie le troisième raccord (15) du dispositif de vanne (10) au dispositif de vanne de remorque (9).

7. Dispositif de frein de stationnement électrique (40; 60; 70) selon l'une quelconque des revendications 1 à 6 selon les variantes i) ou ii), **caractérisé en ce que** la vanne relais (28) est conçue de telle manière qu'elle commute la vanne relais (28) d'une position de passage à une position de purge en cas de descente en dessous d'une pression minimale prédéterminée, à laquelle l'entrée de commande (28_4) est soumise, dans lequel dans la position de purge la sortie de travail (28_2) est raccordée de façon pneumatique à une sortie de purge (28_3) de la vanne relais.

8. Véhicule utilitaire avec un dispositif de frein de stationnement électrique (40; 50; 60; 70) selon l'une quelconque des revendications précédentes.
